# EUROPÄISCHE PATENTSCHRIFT

(11) **EP 3 355 137 B1**
(45) Veröffentlichungstag und Bekanntmachung des Hinweises auf die Patenterteilung: **06.03.2024**
(21) Anmeldenummer: 18153962.8
(22) Anmeldetag: 29.01.2018
(51) Int. Cl.: G05B 15/02, G08C 17/02

(54) **REIHENEINBAUGERÄT DER ELEKTROINSTALLATION UND ANORDNUNG**
RAIL MOUNTED DEVICE FOR ELECTRIC INSTALLATION AND ARRANGEMENT
APPAREIL ENCASTRABLE EN SÉRIE POUR INSTALLATION ÉLECTRIQUE ET DISPOSITIF

(30) Priorität: 31.01.2017 DE 102017101860; 09.02.2017 DE 102017102514
(43) Veröffentlichungstag der Anmeldung: 01.08.2018
(73) Patentinhaber: ABB Schweiz AG, 5400 Baden (CH)
(72) Erfinder: Heilig, Peter, 69121 Heidelberg (DE); Kaptein, Marcel, 76684 Östringen (DE)
(74) Vertreter: Wesch, Arno

(56) Entgegenhaltungen:
- DE-B3-102014 201 468
- US-A1- 2013 249 441
- US-A1- 2013 254 686

## Beschreibung

Die Erfindung betrifft eine Anordnung nach dem Oberbegriff des Patentanspruchs 1.

Aus der US 2013/0249441 A1 ist bereits eine solche Anordnung bekannt, bei welcher ein Dimmer Teil eines Kontrollnetzwerks ist, wobei eine Gateway-Einrichtung mit dem Kontrollnetzwerk und über ein externes Netzwerk mit einem Tablet verbunden ist. Die DE 10 2014 201 468 B3 zeigt, dass ein Steuergerät zur Steuerung von Komfortgrößen eines Raumes ein Display aufweist, auf dem ein angeforderter QR-Code darstellbar ist. Die US 2013/0254686 A1 zeigt ein Kontrollsystem mit Personalcomputern und einem mobilen Terminal.

Reiheneinbaugeräte der Elektroinstallation haben üblicherweise ein Gehäuse, aus Isolierstoff, das die elektrischen und elektronischen Baugruppen und Funktionsbausteine aufnimmt. Das Gehäuse ist zum Reiheneinbau auf Normprofiltragschienen in einem Elektroinstallationsverteiler ausgebildet. Charakteristisch für das Gehäuse eines Reiheneinbaugerätes ist, dass die Gehäuseumfangskontur an die Gehäuseumfangskontur anderer Reiheneinbaugeräte, die zusammen in einem Reihenverbund nebeneinander auf der Normprofiltragschiene aufgerastet sind, angepasst ist. Reiheneinbaugeräte finden Verwendung in modernen Bussystemen der Gebäudeautomation, beispielsweise in Gebäudeautomationssystemen, die dem KNX-Standard folgen. Ein solches Reiheneinbaugerät ist beispielsweise ein als Schaltaktor oder Sensor oder auch als Switch oder Netzwerkweiche oder Netzwerkverteiler bekanntes Gerät. Wenn das Reiheneinbaugerät beispielsweise ein Schaltaktor ist, der in einem Installationsverteiler im Keller eines Gebäudes installiert ist, dann ist die Einrichtung, mit der er signaltechnisch verbunden ist, beispielsweise ein Jalousienmotor oder eine Beleuchtungseinrichtung oder Ähnliches, welche im Gebäude an unterschiedlichen Orten in unterschiedlichen Räumen sich befinden können. Die signaltechnische Verbindung des Reiheneinbaugerätes mit der Einrichtung kann entweder herkömmlich über Signalleitungen erfolgen, oder sie kann auch dadurch realisiert sein, dass das Reiheneinbaugerät und die Einrichtung beides Busgeräte eines Bussystems der Gebäudeinstallation sind, beispielsweise in einem Gebäudeautomatisierungssystem, das dem KNX-Standard folgt. In diesem Fall erfolgt die signaltechnische Kopplung über die Busleitung.

Aus dem Stand der Technik, beispielsweise der US 2013/0249441 A1, US 2013/254686 A1 und DE 10 2014 201 468 B3, sind Reiheneinbaugeräte bzw. Steuergeräte, bekannt, mit denen Beleuchtungen, Jalousien, Rollläden, Heizventile, Lüftungsanlagen, Klimatisierungssysteme und andere elektrische Verbraucher in Wohngebäuden, Hotels, Schulen, Büros, Industriegebäuden, Flughäfen und auf Schiffen gesteuert, bedient und/ oder überwacht werden können.

Ein Einbaugerät, das einen Grundkörper aufweist, mit dem ein Bedienfeld verbunden ist, ist aus der DE 10 2007 019 505 A1 bekannt. Die DE 10 2013 009 809 A1 zeigt ein Reiheneinbaugerät der Gebäudesystemtechnik, auf dessen Gehäusevorderseite Anzeigeelemente angebracht sind.

Reiheneinbaugeräte der zuvor genannten Art weisen oft Bedienfelder auf, mit denen Ausgänge und Eingänge von nachgelagerten Einrichtungen gesteuert werden können. Die Bedienfelder umfassen üblicherweise auch LEDs, die einen jeweiligen Status eines Ein- oder Ausgangs anzeigen.

Die Bedienfelder umfassen häufig Folientastaturen und/ oder Leiterplatten, welche mit LEDs und/ oder Tasteinrichtungen bestückt sind. Es sind auch Bedienfelder bekannt, welche Silikon-Schaltmatten umfassen. Bedienfelder können dabei eigenständig verbaubare Bauteile sein, die über Kabel mit den Reiheneinbaugeräten verbunden sind.

Die Herstellung solcher Bedienfelder ist jedoch kostenintensiv. Des Weiteren ist deren Montage aufwendig. Überdies nimmt ein Bedienfeld relativ viel Platz auf dem ihm zugeordneten Reiheneinbaugerät oder in dessen Umgebung ein.

Schließlich sind Bedienfelder aufwendig zu beschaffen und auf Lager zu halten, so dass sich die gesamte Logistik aufwendig gestaltet. Dies hängt damit zusammen, dass unterschiedliche Reiheneinbaugeräte unterschiedliche Anzahlen von Kanälen aufweisen können und dass unterschiedliche Reiheneinbaugeräte unterschiedliche Baugrößen zeigen, an die die Bedienfelder angepasst werden müssen.

Insoweit muss eine Vielzahl von unterschiedlichen Folien, Schaltmatten und/ oder Leiterplatten auf Lager gehalten oder angefertigt werden.

Der Erfindung liegt daher die Aufgabe zugrunde, ein Reiheneinbaugerät zum Ansteuern, Bedienen und/ oder Überwachen von nachgelagerten Einrichtungen derart auszugestalten und weiterzubilden, dass dieses möglichst unabhängig von dessen Dimension und der Anzahl von dessen Kanälen bedienbar ist.

Erfindungsgemäß wird die voranstehende Aufgabe durch eine Anordnung mit den Merkmalen des Patentanspruchs 1 gelöst.

Danach ist das eingangs genannte Reiheneinbaugerät dadurch gekennzeichnet, dass das Reiheneinbaugerät kabellos mit einer vom Reiheneinbaugerät baulich getrennten Vorrichtung bedienbar ist.

Erfindungsgemäß ist erkannt worden, dass hierdurch auf Bedienfelder, die händisch unmittelbar am Reiheneinbaugerät bedient werden müssen, verzichtet werden kann. Konkret ist erkannt worden, dass Vorrichtungen, die nicht baulich zum Reiheneinbaugerät gehören, genutzt werden können, um dieses bzw. dessen Kanäle oder dessen Mikrocontroller zu bedienen.

Auf kostenintensive Bedienfelder, insbesondere Folientastaturen, kann verzichtet werden. So können Kosten eingespart und Bedienfehler unmittelbar am Reiheneinbaugerät vermieden werden.

Erfindungsgemäß erfasst der Grundkörper eine Komponente, welche Funksignale empfängt und eine Nahfeldkommunikation (NFC) ermöglicht. Durch Funksignale ist eine rasche Bedienung in der Nähe des Reiheneinbaugeräts zuverlässig möglich.

Die Nahfeldkommunikation (Near Field Communication, Abkürzung NFC) ist ein internationaler Übertragungsstandard. Eine Kommunikation über weite Strecken findet bevorzugt nicht statt. Bevorzugt erfolgt die Kommunikation zwischen dem Reiheneinbaugerät und der baulich getrennten Vorrichtung nicht über W-LAN.

Der Grundkörper umfasst einen Chip, der eine Datenübertragung nach dem Industriestandard Bluetooth (Marke) bewirkt. Bluetooth (Marke) - Chips sind kostengünstig und stromsparend. Vor diesem Hintergrund sei auf "4.1 Bluetooth Low Energy" verwiesen. Die Bezeichnung Bluetooth (Marke) steht für einen Industriestandard gemäß IEEE 802.15.1 für die Datenübertragung zwischen kommunizierenden Geräten über eine kurze Distanz per Funktechnik. Durch den Industriestandard Bluetooth (Marke) wird eine Schnittstelle ermöglicht, über die sowohl Mobiltelefone als auch Computer kommunizieren können.

Erfindungsgemäß ist bzw. sind dem Grundkörper ein 2D-Code und/ oder ein QR-Code und/ oder eine Seriennummer zugeordnet. Durch einen solchen Code oder eine solche Seriennummer ist ein Gerät oder ein Gerätetyp eindeutig identifizierbar. Ein 2D-Code oder ein QR-Code kann leicht optisch eingelesen werden. Eine Seriennummer kann optisch eingelesen und/ oder händisch eingegeben werden.

Der Grundkörper weist kein Bedienfeld oder händisch betätigbare Elemente zum Bedienen des Reiheneinbaugeräts auf. Hierdurch werden Bedienfehler unmittelbar am Reiheneinbaugerät vermieden.

Das Reiheneinbaugerät ist vorteilhaft als Installationsgerät, beispielsweise als Schaltaktor, für Einrichtungen der Gebäudetechnik ausgestaltet. Hierdurch können mit dem Reiheneinbaugerät beispielsweise Jalousien gesteuert und/ oder überwacht werden.

Das Reiheneinbaugerät ist bevorzugt an ein KNX-System angeschlossen. KNX ist ein Fachbegriff für einen Feldbus zur Gebäudeautomation. In einem KNX-System wird ein solcher Feldbus für die Kommunikation von Teilnehmern des Systems verwendet. Auch Reiheneinbaugeräte, die über andere Bussysteme kommunizieren, sind denkbar und sind von der vorliegenden Anmeldung mit umfasst.

Eine Anordnung umfasst ein Reiheneinbaugerät der hier beschriebenen Art und eine Vorrichtung, welche als Mobiltelefon, insbesondere als Smartphone / Tablet, und/ oder als Computer ausgestaltet ist. Mobiltelefone, insbesondere Smartphones, und Computer sind für einen Nutzer leicht verfügbar und können leicht mitgeführt werden. Des Weiteren können diese Kommunikationsgeräte einem Nutzer Bedienhinweise in Bezug auf ein Reiheneinbaugerät oder die von diesem gesteuerte Einrichtung geben. So können Bedienfehler, die bei einer Betätigung eines Bedienfelds, insbesondere einer Folientastatur, unmittelbar am Reiheneinbaugerät auftreten, vermieden werden.

Auf dem Mobiltelefon und/ oder dem Computer ist eine Software installiert, mit welcher ein 2D-Code oder QR-Code und/ oder eine Seriennummer einlesbar oder erfassbar ist bzw. sind und eine Verbindung zwischen dem Mobiltelefon und/ oder Computer und dem Reiheneinbaugerät herstellbar ist, welche ein Bedienen des Mikrocontrollers oder des Reiheneinbaugeräts durch das Mobiltelefon und/ oder den Computer ermöglicht. Nach dem eindeutigen Identifizieren eines Reiheneinbaugeräts kann dieses bedient werden, ohne dieses physikalisch zu berühren. So können teure Bedienfelder am Reiheneinbaugerät selbst, insbesondere Folientastaturen, eingespart werden.

Sofern ein Mobiltelefon, insbesondere ein Smartphone, verwendet wird, ist die Software bevorzugt als App ausgestaltet.

Auf dem Mobiltelefon und/ oder dem Computer wird ein virtuelles Bedienfeld angezeigt, mit welchem der Mikrocontroller oder das Reiheneinbaugerät bedienbar ist. Das virtuelle Bedienfeld ist bevorzugt wie ein herkömmliches, bereits sich im Einsatz befindendes reales Bedienfeld aufgebaut. Hierdurch kann ein Nutzer das Reiheneinbaugerät so bedienen, wie er es bei Vorliegen eines realen Bedienfelds bedienen würde.

Die Kanäle des Reiheneinbaugeräts sind bevorzugt mit dem Mobiltelefon und/ oder dem Computer bedienbar und/ oder ein Status eines Kanals ist mit dem Mobiltelefon und/ oder dem Computer anzeigbar. So ist eine umfassende Überwachung und Steuerung einer Einrichtung ermöglicht.

In der Zeichnung zeigen
- Fig. 1: ein Reiheneinbaugerät des Stands der Technik, welches mit einem realen Bedienfeld, nämlich einer realen Folientastatur, zur Steuerung des Reiheneinbaugeräts verbunden ist,
- Fig. 2: zeigt ein Reiheneinbaugerät, welches kein reales Bedienfeld aufweist, aber mit einem 2D-Code versehen ist, damit dieses von einem Computer und/ oder von einem Smartphone erkennbar und durch den Computer und/ oder das Smartphone bedienbar ist, und
- Fig. 3: die Anordnung gemäß Fig. 2, wobei auf den Bildschirmen des Computers und des Smartphones ein virtuelles Bedienfeld angezeigt ist, welches dem realen gemäß Fig. 1 optisch nachempfunden ist.

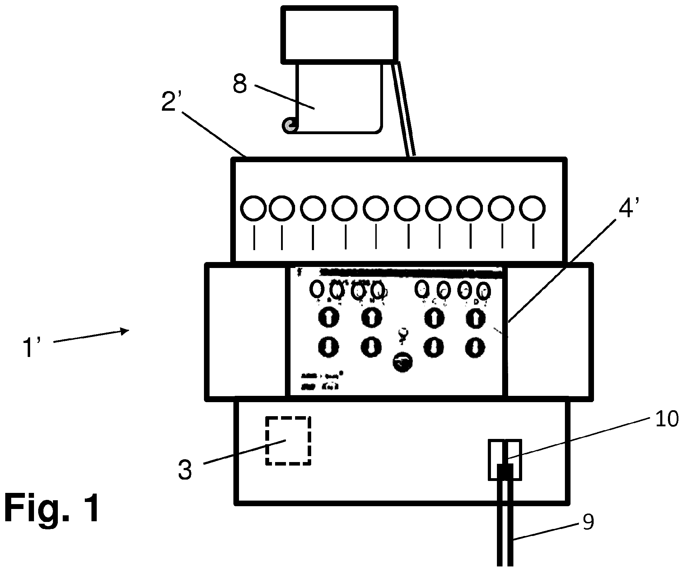

Fig. 1 zeigt ein Reiheneinbaugerät 1' des Stands der Technik zur Verwendung in der Gebäudetechnik, umfassend einen Grundkörper 2', an den mindestens eine Einrichtung 8, hier im Beispiel eine Jalousie mit ihrem Jalousiemotor angeschlossen ist, und signaltechnisch über die Busleitung 9 eines Bussystems der Gebäudeinstallation, die an einer Busklemme 10 angeschlossen ist, verbunden ist, dessen Einrichtung durch das Reiheneinbaugerät 1' bedienbar, überwachbar und/ oder steuerbar ist, wobei der Grundkörper 2' einen Mikrocontroller 3 umfasst, welcher das Reiheneinbaugerät 1' steuert und/ oder Status-Informationen bereitstellt.

Der Grundkörper 2` ist über ein nicht gezeigtes Kabel mit einem händisch betätigbaren, realen Bedienfeld 4' verbunden. Hier im Beispiel ist das Bedienfeld 4' eine Folientastatur, oder eine Leiterplatte mit einem separaten Gehäuse.

Ein solches Reiheneinbaugerät 1' wird beispielsweise zur Bedienung, Überwachung und Steuerung von Jalousien verwendet und in einem Schaltschrank verbaut.

Das Reiheneinbaugerät 1' weist hier im Beispiel je 4 Kanäle für Aufwärts- und Abwärtsbewegungen der Jalousien auf. Der Mikrocontroller 3 steuert das Reiheneinbaugerät 1' und stellt alle Arten von Status-Informationen bereit, beispielsweise Alarmmeldungen oder Störungsmeldungen.

Das Bedienfeld 4' zum Bedienen des Reiheneinbaugeräts 1', nämlich eines Schaltaktors für Jalousien, ist als zum Grundkörper 2` separates Bauteil ausgestaltet. Das reale Bedienfeld 4' ist mit dem Grundkörper 2` über eine Kabelverbindung, beispielsweise über ein Flachbandkabel, verbunden. Das Bedienfeld 4' zeigt die Status-Informationen an und übermittelt Schaltbefehle an den Mikrocontroller 3 innerhalb des Grundkörpers 2`.

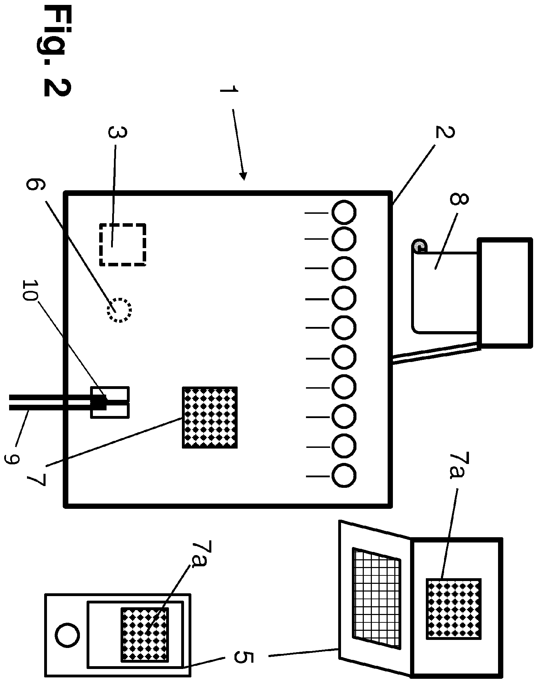

Fig. 2 zeigt ein Reiheneinbaugerät 1 zur Verwendung in der Gebäudetechnik, umfassend einen Grundkörper 2, an den mindestens eine Einrichtung 8, wie beispielsweise mindestens eine Jalousie mit ihrem Jalousienmotor angeschlossen ist und signaltechnisch über die Busleitung 9 eines Bussystems der Gebäudeinstallation, die an einer Busklemme 10 angeschlossen ist, anschließbar oder angeschlossen ist, welche Jalousie durch das Reiheneinbaugerät 1 bedienbar, überwachbar und/ oder steuerbar ist, wobei der Grundkörper 2 einen Mikrocontroller 3 umfasst, welcher das Reiheneinbaugerät 1 steuert und/ oder Status-Informationen bereit stellt.

Die Status-Informationen geben bevorzugt Auskunft über den Zustand des Reiheneinbaugeräts 1 und/ oder der Einrichtung 8. Es können Fehler- und Alarmzustände des Reiheneinbaugeräts 1 und/ oder der Einrichtung 8 angezeigt werden.

Der Mikrocontroller 3 ist innerhalb des Grundkörpers 2 aufgenommen.

Der Mikrocontroller 3 ist kabellos mit einer vom Reiheneinbaugerät 1 baulich getrennten Vorrichtung 5 bedienbar, welche als Computer mit einem Bildschirm und einer Tastatur oder als Mobiltelefon oder Tablet, nämlich als Smartphone, ausgestaltet ist.

Es ist hier im Gegensatz zu Fig. 1 keine Kabelverbindung zwischen einem realen Bedienfeld und dem Grundkörper 2 vorgesehen. Auch ist kein reales Bedienfeld vorgesehen, welches am Reiheneinbaugerät 1 körperlich angeordnet ist.

Der Grundkörper 2 umfasst eine Komponente, welche Funksignale empfängt und/ oder eine Nahfeldkommunikation (NFC) mit der Vorrichtung 5 ermöglicht.

Der Grundkörper 2 umfasst einen Chip 6, der eine Datenübertragung nach dem Industriestandard Bluetooth (Marke) bewirkt.

Dem Grundkörper 2 ist ein 2D-Code 7 oder ein QR-Code zugeordnet.

Der Grundkörper 2 weist kein Bedienfeld oder händisch betätigbare Elemente zum Bedienen des Reiheneinbaugeräts 1 auf. Das Reiheneinbaugerät 1 ist konkret als Installationsschaltgerät oder Schaltaktor oder Sensor oder Switch oder Netzwerkweiche oder Energieversorgungseinheit, beispielsweise Netzteil, für Einrichtungen der Gebäudetechnik ausgestaltet.

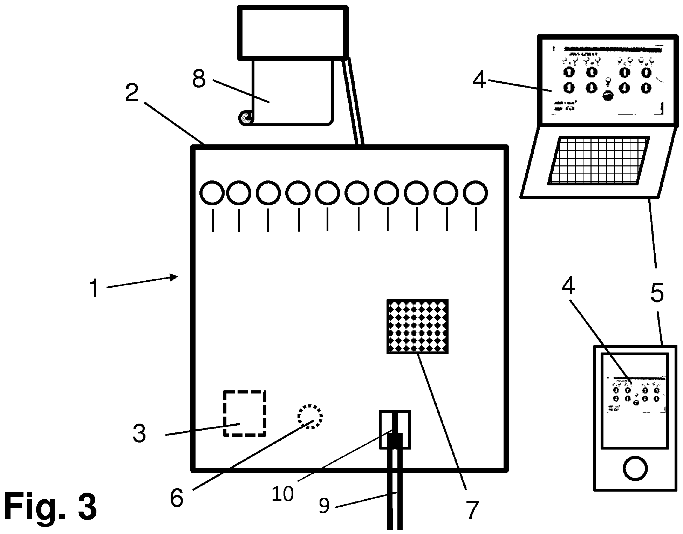

Fig. 3 zeigt konkret eine Anordnung, umfassend das Reiheneinbaugerät 1 und die Vorrichtung 5, welche als Computer oder als Mobiltelefon / Tablet, nämlich als Smartphone, ausgestaltet sein kann.

Auf dem Computer und dem Smartphone ist jeweils eine Software installiert, mit welcher der 2D-Code 7 oder QR-Code einlesbar ist und eine Verbindung zwischen dem Computer und dem Reiheneinbaugerät 1 bzw. zwischen dem Mobiltelefon und dem Reiheneinbaugerät 1 herstellt. Die Software ermöglicht das Bedienen des Mikrocontrollers 3 oder des Reiheneinbaugeräts 1 durch den Computer bzw. durch das Mobiltelefon, nämlich durch das Smartphone. Eine solche Software, wenn sie auf einem Smartphone läuft, wird üblicherweise auch kurz als App bezeichnet. Bei einem Smartphone wird mittels der eingebauten Kamera der 2D Code oder QR Code aufgenommen, und die Software erkennt diesen und liest die in ihm codierte Information aus und verarbeitet diese weiter.

Der 2D-Code 7 oder der QR Code kann nach dem Einlesen durch den Computer oder das Mobiltelefon auf dessen Bildschirm als virtueller 2D-Code 7a zunächst noch einmal dargestellt werden.

Auch eine direkte Eingabe der Seriennummer ist möglich. Die Seriennummer ist oft außen sichtbar auf dem Gehäuse aufgedruckt und kann daher abgelesen und direkt eingegeben werden.

Nach dem Erkennen und eindeutigen Identifizieren des Reiheneinbaugeräts 1 durch die Software wird auf dem Computer oder auf dem Mobiltelefon, konkret auf dessen Bildschirm, ein virtuelles Bedienfeld 4 angezeigt, mit welchem der Mikrocontroller 3 oder das Reiheneinbaugerät 1 bedienbar ist.

Die Software, die App, ist dazu eingerichtet, um zu dem Reiheneinbaugerät 1, das sie mittels des 2D Code oder dem QR-Code identifiziert hat, das passende Bedienfeld auf dem Display der Vorrichtung, hier des Smartphones oder des Computers, zu erzeugen und anzuzeigen.

Das Bedienfeld 4 zeigt dann beispielsweise eine virtuelle Folientastatur, die der Folientastatur des realen Bedienfelds 4` nachempfunden ist. Die Oberfläche kann auch anders ausgestaltet sein, z.B. in Anlehnung an die Oberfläche eines Inbetriebnahmetools.

Das virtuelle Bedienfeld 4 ist auf das jeweilige Reiheneinbaugerät 1 abgestimmt und an dieses werksseitig angepasst.

Im Speicher des Computers oder Mobiltelefons kann eine Vielzahl von Bedienfeldern abgelegt sein. Es kann dann das jeweils passende geladen werden.

Die Kanäle des Reiheneinbaugeräts 1 sind mit dem Computer oder dem Mobiltelefon bedienbar. Ein Status eines Kanals ist mit dem Computer oder mit dem Mobiltelefon anzeigbar.

Nachdem die Vorrichtung 5 eine Verbindung zu dem Reiheneinbaugerät 1 aufgebaut hat, werden auf der Vorrichtung 5 die bedienbaren Kanäle angezeigt. Die Kanäle werden mit Status-Informationen und Bedienmöglichkeiten angezeigt.

### Bezuaszeichenliste

- 1, 1': Reiheneinbaugerät
- 2, 2`: Grundkörper
- 3: Mikrocontroller
- 4': reales Bedienfeld von 1'
- 4: virtuelles Bedienfeld von 5
- 5: Vorrichtung
- 6: Chip
- 7: 2D-Code
- 7a: virtueller 2D-Code
- 8: Einrichtung
- 9: Busleitung
- 10: Busklemme

## Patentansprüche

1. Anordnung, umfassend ein Reiheneinbaugerät (1) der Elektroinstallation und eine Vorrichtung (5), welche als Mobiltelefon oder als Tablet oder als Computer ausgestaltet ist, wobei das Reiheneinbaugerät (1) einen Grundkörper (2) ohne ein Bedienfeld oder händisch betätigbare Elemente zum Bedienen des Reiheneinbaugeräts (1) umfasst, wobei an den Grundkörper (2) mindestens eine Einrichtung (8) signaltechnisch anschließbar ist, welche durch das Reiheneinbaugerät (1) bedienbar, überwachbar und/ oder steuerbar ist, wobei der Grundkörper (2) einen Mikrocontroller (3) umfasst, welcher das Reiheneinbaugerät (1) steuert und/ oder Status-Informationen bereit stellt, und wobei das Reiheneinbaugerät (1) kabellos mit der vom Reiheneinbaugerät (1) baulich getrennten Vorrichtung (5) bedienbar ist, **dadurch gekennzeichnet, dass** der Grundkörper (2) dazu eine Komponente aufweist, welche Funksignale empfängt und eine Nahfeldkommunikation (NFC) zur Bedienung in der Nähe des Reiheneinbaugeräts (1) ermöglicht, wobei dem Grundkörper (2) ein 2D-Code (7) und/ oder ein QR-Code und/ oder eine Seriennummer zugeordnet ist bzw. sind, wobei auf dem Mobiltelefon oder dem Tablet oder dem Computer eine Software installiert ist, mit welcher der 2D-Code (7) oder der QR-Code und/ oder die Seriennummer einlesbar oder erfassbar ist bzw. sind und eine Verbindung zwischen dem Mobiltelefon oder dem Tablet oder dem Computer und dem Reiheneinbaugerät (1) herstellbar ist, welche das Bedienen des Mikrocontrollers (3) oder des Reiheneinbaugeräts (1) durch das Mobiltelefon oder das Tablet oder den Computer ermöglicht, wobei auf dem Mobiltelefon oder dem Tablet oder dem Computer nach dem mittels des 2D-Codes und/ oder des QR-Codes und/ oder der Seriennummer Erkennen und eindeutigen Identifizieren des Reiheneinbaugeräts (1) durch die Software ein auf das jeweilige Reiheneinbaugerät abgestimmtes virtuelles Bedienfeld (4) angezeigt wird, mit welchem das Reiheneinbaugerät (1) bedienbar ist, und wobei der Grundkörper (2) einen Chip (6) umfasst, der eine Datenübertragung nach dem Industriestandard IEEE 802.15.1 bewirkt.

2. Anordnung nach Anspruch 1, **dadurch gekennzeichnet, dass** das Reiheneinbaugerät (1) an ein KNX-System oder einen Feldbus gemäß KNX-Standard angeschlossen ist.

3. Anordnung nach einem der voranstehenden Ansprüche, **gekennzeichnet durch** eine Ausgestaltung des Reiheneinbaugeräts (1) als Installationsgerät für Einrichtungen der Gebäudetechnik, nämlich als Schaltaktor, bevorzugt für die Steuerung und/ oder Überwachung von Jalousien.

4. Anordnung nach einem der voranstehenden Ansprüche, **dadurch gekennzeichnet, dass** die Kanäle des Reiheneinbaugeräts (1) mit dem Mobiltelefon oder dem Tablet oder dem Computer bedienbar sind und/oder dass ein Status eines Kanals mit dem Mobiltelefon oder dem Tablet oder dem Computer anzeigbar ist.

5. Anordnung nach einem der voranstehenden Ansprüche, **dadurch gekennzeichnet, dass** das virtuelle Bedienfeld (4) wie ein herkömmliches, sich bereits im Einsatz befindendes reales Bedienfeld aufgebaut ist.

## Claims

1. Arrangement comprising an electrical installation rail-mounted device (1) and an apparatus (5) in the form of a mobile telephone or a tablet or a computer, wherein the rail-mounted device (1) comprises a main body (2) without an operating panel or manually actuatable elements for operating the rail-mounted device (1), wherein at least one device (8) which can be operated, monitored and/or controlled by the rail-mounted device (1) can be connected to the main body (2) using signalling, wherein the main body (2) comprises a microcontroller (3) which controls the rail-mounted device (1) and/or provides status information, and wherein the rail-mounted device (1) can be wirelessly operated using the apparatus (5) physically separate from the rail-mounted device (1), **characterized in that** the main body (2) has for this purpose a component which receives radio signals and enables near-field communication (NFC) for operation in the vicinity of the rail-mounted device (1), wherein a 2D code (7) and/or a QR code and/or a serial number is/are assigned to the main body (2), wherein software is installed on the mobile telephone or the tablet or the computer, which software can be used to read or capture the 2D code (7) or the QR code and/or the serial number and to establish a connection between the mobile telephone or the tablet or the computer and the rail-mounted device (1) and makes it possible to operate the microcontroller (3) or the rail-mounted device (1) by means of the mobile telephone or the tablet or the computer, wherein, after the rail-mounted device (1) has been detected and uniquely identified using the 2D code and/or the QR code and/or the serial number by means of the software, a virtual operating panel (4) which is matched to the respective rail-mounted device and can be used to operate the rail-mounted device (1) is displayed on the mobile telephone or the tablet or the computer, and wherein the main body (2) comprises a chip (6) which transmits data according to the industrial standard IEEE 802.15.1.

2. Arrangement according to Claim 1, **characterized in that** the rail-mounted device (1) is connected to a KNX system or a field bus according to the KNX standard.

3. Arrangement according to one of the preceding claims, **characterized by** a configuration of the rail-mounted device (1) as an installation device for building technology devices, namely as a switching actuator, preferably for controlling and/or monitoring blinds.

4. Arrangement according to one of the preceding claims, **characterized in that** the channels of the rail-mounted device (1) can be operated using the mobile telephone or the tablet or the computer, and/or **in that** a status of a channel can be displayed using the mobile telephone or the tablet or the computer.

5. Arrangement according to one of the preceding claims, **characterized in that** the virtual operating panel (4) is constructed like a conventional real operating panel already in use.

## Revendications

1. Agencement, comprenant un appareil encastrable en série (1) pour une installation électrique et un dispositif (5) qui est configuré en tant que téléphone mobile ou tablette ou ordinateur, dans lequel l'appareil encastrable en série (1) comprend un corps de base (2) sans panneau de contrôle ni éléments à actionnement manuel pour l'utilisation de l'appareil encastrable en série (1), dans lequel au moins un équipement (8) peut être connecté en termes de signal au corps de base (2) et peut être utilisé, surveillé et/ou commandé par l'appareil encastrable en série (1), dans lequel le corps de base (2) comprend un microcontrôleur (3) qui commande l'appareil encastrable en série (1) et/ou fournit des informations d'état, et dans lequel l'appareil encastrable en série (1) peut être utilisé sans fil à l'aide du dispositif (5) séparé par construction de l'appareil encastrable en série (1), **caractérisé en ce que** le corps de base (2) présente à cet effet un composant qui reçoit des signaux radio et permet une communication en champ proche (NFC) pour une utilisation à proximité de l'appareil encastrable en série (1), dans lequel un code 2D (7) et/ou un code QR et/ou un numéro de série sont associés au corps de base (2), dans lequel, sur le téléphone mobile ou la tablette ou l'ordinateur, un logiciel est installé qui permet de lire ou de détecter le code 2D (7) ou le code QR et/ou le numéro de série, et permet d'établir une liaison entre le téléphone mobile ou la tablette ou l'ordinateur et l'appareil encastrable en série (1) qui permet l'utilisation du microcontrôleur (3) ou de l'appareil encastrable en série (1) par le téléphone mobile ou la tablette ou l'ordinateur, dans lequel, sur le téléphone mobile ou la tablette ou l'ordinateur, après la reconnaissance et l'identification univoque de l'appareil encastrable en série (1) par le logiciel au moyen du code 2D et/ou du code QR et/ou du numéro série, un panneau de contrôle virtuel (4), adapté à l'appareil encastrable en série respectif, est affiché qui permet d'utiliser l'appareil encastrable en série (1), et dans lequel le corps de base (2) comprend une puce (6) qui provoque une transmission de données selon la norme industrielle IEEE 802.15.1.

2. Agencement selon la revendication 1, **caractérisé en ce que** l'appareil encastrable en série (1) est connecté à un système KNX ou à un bus de terrain selon la norme KNX.

3. Agencement selon l'une quelconque des revendications précédentes, **caractérisé par** une configuration de l'appareil encastrable en série (1) en tant qu'appareil d'installation pour des équipements domotiques, notamment en tant qu'actionneur de commutation, de préférence pour la commande et/ou la surveillance de stores vénitiens.

4. Agencement selon l'une quelconque des revendications précédentes, **caractérisé en ce que** les canaux de l'appareil encastrable en série (1) peuvent être utilisés par le téléphone mobile ou la tablette ou l'ordinateur, et/ou **en ce qu'**un état d'un canal peut être affiché par le téléphone mobile ou la tablette ou l'ordinateur.

5. Agencement selon l'une quelconque des revendications précédentes, **caractérisé en ce que** le panneau de contrôle virtuel (4) est structuré comme un panneau de contrôle réel conventionnel qui est déjà mis en oeuvre.
